# FASCICULE DE BREVET EUROPEEN

(11) **EP 2 532 547 B1**
(45) Date de publication et mention de la délivrance du brevet: **26.03.2014**
(21) Numéro de dépôt: 12171495.0
(22) Date de dépôt: 11.06.2012
(51) Int. Cl.: B60K 1/04, B62D 21/04, B62D 21/17, B62D 21/07, B62D 31/00

(54) **Structure de châssis destinée à supporter un habitacle pour former un véhicule automobile à propulsion électrique et véhicule automobile comportant une telle structure de châssis**
Fahrgestellstruktur zur Aufnahme eines Fahrzeuginnenraums eines Kraftfahrzeugs mit Elektroantrieb, und mit einer solchen Fahrgestellstruktur ausgestattetes Kraftfahrzeug
Frame structure for supporting a passenger compartment to form an electrically-powered automobile and automobile comprising such a frame structure

(30) Priorité: 10.06.2011 FR 1155140
(43) Date de publication de la demande: 12.12.2012
(73) Titulaire: Muses, 78700 Conflans Sainte Honorine (FR)
(72) Inventeur: Michel, Luc, 78740 EVECQUEMONT (FR)
(74) Mandataire: Derambure, Christian

(56) Documents cités:
- EP-A1- 1 440 832
- DE-A1-102009 038 834
- FR-A1- 2 837 428
- US-A- 5 760 569
- US-A1- 2003 066 694

## Description

L'invention concerne, de façon générale, le domaine technique des véhicules automobiles à propulsion électrique et, notamment, au domaine des structures de châssis destinées à supporter un habitacle pour former tel véhicule automobile à propulsion électrique.

Plus précisément, l'invention concerne, selon un premier de ses aspects, une structure de châssis spécialement destinée à supporter un habitacle pour former un véhicule automobile à propulsion électrique, comportant un train avant et un train arrière s'étendant dans une direction transversale sensiblement perpendiculaire à une direction longitudinales et aptes à être supportés, respectivement, par les roues avant et arrière dudit véhicule automobile ; des moyens formant rigidification aptes à relier structurellement et fonctionnellement le train avant au train arrière de manière à assurer la rigidité de la structure de châssis ; des moyens formant réceptacle agencés entre le train avant et le train arrière, capables de recevoir et de supporter un système de stockage d'énergie électrique permettant d'approvisionner le véhicule automobile en énergie électrique en quantité suffisante pour assurer sa propulsion.

Dans ce domaine technique, il est connu de l'art antérieur différentes solutions visant à répondre aux problématiques générales de manutention, d'encombrement et de poids générées par l'utilisation des systèmes de stockage d'énergie électrique amovibles.

Notamment, une structure de châssis selon la définition qu'en donne le préambule ci-dessus est connue de l'homme du métier par l'exemple qu'en donne le document WO-A1-02/04275. Ce document décrit un véhicule automobile à propulsion électrique comprenant un châssis cadre doté d'une partie avant et d'une partie arrière séparées l'une de l'autre par un espace de réception capable de recevoir un support de batterie. Pour ce faire, le châssis cadre présente une portion latérale ouverte au travers de laquelle le support de batterie peut être inséré, par coulissement, pour former partie intégrante du châssis cadre. Le support de batterie assure ainsi, en partie, la rigidité des parties avant et arrière l'une par rapport à l'autre. En outre, le support de batterie - qui s'étend sur toute la largeur de la structure de châssis - peut être retiré de l'espace de réception par coulissement.

Ce document WO-A1-02/04275 cherche à répondre aux problématiques en intégrant un support de batterie amovible dans la structure d'un châssis cadre. Il présente cependant, lui-même, plusieurs inconvénients. D'abord, l'intégration d'un seul et unique support de batterie dans la structure du châssis entraîne d'importants problèmes de manutention puisque le support de batterie, lorsqu'il est chargé, devient lourd et, donc, difficile à installer dans l'espace de réception agencé dans le châssis. Par ailleurs, le gain de place n'est pas optimal puisque le châssis décrit dans ce document ne mentionne pas l'intégration des organes de transmission destinés à assurer l'orientation et/ou la propulsion des roues avant et arrière du véhicule automobile et impose donc de surélever ces organes de transmission par rapport au support de batterie. En outre, la rigidité du châssis cadre décrit dans ce document se trouve considérablement réduite du fait de la réalisation de la portion latérale ouverte et de l'existence d'un espace de réception s'étendant sur toute la largueur du véhicule automobile.

Le document US-A-6,059,058 qui décrit la réalisation d'un châssis cadre comportant un compartiment dans lequel peut être agencé une batterie, engendre également des problèmes techniques. D'abord, l'intégration de la batterie à l'intérieur du châssis cadre soulève d'importantes problématiques de manutention puisque le compartiment de réception de cette batterie n'est accessible que depuis une ouverture agencée sur la face supérieure du châssis, ce qui nécessite de procéder à une opération complexe consistant à séparer l'habitacle du véhicule du châssis pour procéder au remplacement de cette batterie. En outre, bien que l'agencement des organes de transmission d'énergie mécanique à destination des roues avant et/ou arrière ne soit pas expliciter de manière détaillée, il apparaît que cette réalisation n'assure pas plus que la précédente une organisation optimisée de la batterie vis-à-vis des organes de transmission mécanique destinés à assurer l'orientation et/ou la propulsion des roues avant et arrière du véhicule automobile. Il en découle non seulement des problématiques en termes de compacité de la structure de châssis mais aussi des difficultés de protection desdits organes de transmission mécanique par rapport, notamment, aux batteries.

Le document WO-A1-2009/156769 révèle également la réalisation d'un châssis cadre comportant un compartiment de réception d'une ou plusieurs batterie(s) accessible depuis les parois latérales du véhicule. Toutefois, comme précédemment, la réalisation d'un châssis cadre pose des difficultés de manutention. En effet, l'utilisation de longerons latéraux qui relient structurellement le train avant au train arrière limite considérablement la place disponible pour les ouvertures destinées à assurer l'introduction et l'extraction transversales des batteries depuis l'extérieur du châssis. Les dimensions des batteries susceptibles d'être introduites dans ce type de structure de châssis sont donc nécessairement limitées.

Il est également connu de l'état de la technique les documents US-A-4,342,533, US-A-4,216,839 et US-A-5,760,569 qui décrivent la réalisation de véhicules automobiles comportant des batteries agencées dans la direction transversale ou longitudinale du véhicule automobile. Toutefois, comme précédemment, l'encombrement de telles réalisations est important et la rigidité de la structure châssis n'est pas optimisée.

En outre, l'homme du métier connaît du document US-A-5,542,488, la réalisation d'un habitacle incorporant un réceptacle permettant de recevoir une batterie dans la direction transversale du véhicule et permettant de la retirer depuis l'extérieur du véhicule. Toutefois, outre les inconvénients déjà présentés, il convient de noter que la position du réceptacle ainsi éloigné du centre de gravité du véhicule peut conduire, du fait du poids des batteries, à déséquilibrer le véhicule dans certaines situations de conduite.

Les documents US-A-5,187,423, US-A-3,497,027, US-A-4,087,895 et WO-A1-2004/103784 décrivent d'autres modes de réalisation de structures de châssis soulevant des problématiques similaires à celles précédemment évoquées.

Le document EP-A-1 440 832 , qui sert de base pour la présentation en deux parties de la revendication 1, se rapporte à une structure de châssis de véhicule automobile, en général, et à un véhicule à huit roues, en particulier. Cette structure de châssis est composée d'un moyen de rigidification formé par une poutre centrale creuse reliant structurellement les trains avant et arrière du véhicule automobile dans la direction longitudinale. Par ailleurs, une pluralité de structures de réception sont supportées et positionnées de part et d'autre de cette poutre centrale creuse de manière à permettre la réception de modules de stockage. Dans cette réalisation, il n'est pas prévu que le boîtier de direction comporte un corps rigide creux s'étendant dans la direction longitudinale, en étant maintenu dans l'espace intérieur protégé de la poutre centrale creuse. En effet, le document EP-A-1 440 832 prévoit d'utiliser la poutre centrale creuse pour recevoir des lignes électriques permettant de relier les modules de stockage aux moteurs électriques connectées à chacune des roues du véhicule. Mais ce document ne décrit pas plus qu'il ne suggère d'intégrer des pièces mécaniques permettant l'orientation des roues avant et arrière, au sein de l'espace intérieur protégé de la poutre centrale creuse.

L'état de la technique connu est également illustré par les documents FR 2 837 428, US 2003/066694 et DE 10 2009 038834.

Dans le contexte précédemment exposé, la présente invention a pour but de proposer une structure de châssis et un véhicule exempts de l'une au moins des limitations précédemment évoquées.

À cette fin, l'invention a pour objet une structure de châssis spécialement destinée à supporter un habitacle pour former un véhicule automobile à propulsion électrique, comportant :
un train avant et un train arrière s'étendant dans une direction transversale sensiblement perpendiculaire à une direction longitudinale et aptes à être supportés, respectivement, par les roues avant et arrière dudit véhicule automobile ;
des moyens formant rigidification formés par une poutre centrale creuse définissant un espace intérieur protégé et s'étendant, d'une part, dans la direction longitudinale et, d'autre part, dans une zone longitudinale médiane à encombrement transversal réduit de ladite structure de châssis, la poutre centrale creuse étant apte à relier structurellement et fonctionnellement le train avant au train arrière de manière à assurer la rigidité de la structure de châssis et à supporter la majeure partie des contraintes de séparation des trains avant et arrière du véhicule automobile ;
des moyens formant réceptacle comprenant deux structures de réception agencées entre le train avant et le train arrière, capables de recevoir et de supporter un système de stockage d'énergie électrique permettant d'approvisionner le véhicule automobile en énergie électrique en quantité suffisante pour assurer sa propulsion, lesdites structures de réception étant aptes à recevoir et à supporter, chacune, un module de stockage d'énergie électrique et disposées de part et d'autre de la poutre centrale creuse de sorte à autoriser la réception des modules de stockage d'énergie électrique à proximité du centre de gravité de la structure de châssis ;
une structure de direction apte à assurer l'orientation des roues avant et arrière du véhicule automobile.

Selon l'invention, la structure de direction présente un boîtier de direction qui, d'une part, comporte un corps rigide creux s'étendant majoritairement selon une direction d'épanouissement coïncidant sensiblement avec la direction longitudinale et, d'autre part, est agencé et maintenu dans l'espace intérieur protégé de la poutre centrale creuse de sorte à limiter l'encombrement de la structure de châssis.

L'utilisation de la poutre centrale creuse pour assurer la rigidité de la structure de châssis et supporter la majorité des contraintes de séparation des trains avant et arrière du véhicule permet d'éviter l'utilisation de renforts de rigidification s'étendant latéralement entre les extrémités des trains avant et arrière et, ainsi, de faciliter l'intégration des moyens formant réceptacle. Par ailleurs, le fait de positionner les deux structures de réception de part et d'autre de la poutre centrale creuse permet de limiter considérablement l'encombrement des moyens formant réceptacle tout en assurant un accès optimisé à ces structures de réception afin de ne pas complexifier l'opération de manutention des modules de stockage d'énergie. En outre, il convient de signaler que l'intérêt d'utiliser une telle poutre centrale creuse à encombrement transversal réduit permet de rapprocher les modules de stockage d'énergie électrique du centre de gravité de véhicule et d'éviter ainsi que le poids de ces modules de stockage n'influence de manière préjudiciable le comportement du véhicule automobile sur route.

Selon une réalisation, chacune des deux structures de réception comporte une butée de réception formée par la poutre centrale creuse de manière à empêcher le déplacement transversal du module de stockage vers le centre de gravité de la structure châssis. La poutre centrale creuse empêche ainsi les modules de stockage placés dans les deux structures de réception de se percuter, en cas d'accident notamment.

Selon une réalisation, chacune des deux structures de réception comporte : une structure formant support horizontal s'étendant depuis la poutre centrale creuse et apte à supporter le module de stockage ; deux parois latérales s'étendant sensiblement dans la direction transversale depuis la poutre centrale creuse, de manière à maintenir en position dans la direction longitudinale ledit module de stockage ; une ouverture d'introduction et d'extraction agencée entre les deux parois latérales et en regard de la poutre centrale creuse de manière à autoriser l'introduction et l'extraction transversales par coulissement dudit module de stockage depuis l'extérieur de la structure de châssis. De cette manière, l'introduction et l'extraction des modules de stockage peut s'opérer facilement depuis les l'extérieur du véhicule automobile sans avoir à manipuler l'habitacle tandis que le positionnement et le maintien des modules de stockage à l'intérieur des structures de réception sont assurés par les structures de réception.

Dans ce cas, selon une réalisation, chacune des deux structures de réception comportent un élément obturateur amovible apte à être déplacé depuis une position fermée dans laquelle l'élément obturateur amovible empêche l'extraction transversale, par coulissement, du module de stockage au travers de l'ouverture d'introduction et d'extraction et jusqu'à une position ouverte dans laquelle l'élément obturateur amovible autorise l'introduction et l'extraction transversale, par coulissement, du module de stockage au travers de l'ouverture d'introduction et d'extraction. L'utilisation d'un tel élément obturateur amovible rend aisé la manipulation des modules de stockage d'énergie.

Selon une réalisation, l'élément obturateur amovible présente, en position fermée, une portion formant surface d'appui verticale au-dessus laquelle est aménagé un volume libre de tout obstacle de sorte à former un marchepied permettant de faciliter l'accès à un utilisateur à l'intérieur de l'habitacle du véhicule automobile.

Selon une réalisation, les deux structures de réception sont agencées en regard l'une de l'autre, ce qui assure un bon équilibre de la structure de châssis lorsque les modules de stockage sont introduits dans les structures de réception.

Selon une réalisation alternative, les deux structures de réception sont décalées l'une par rapport à l'autre, dans la direction longitudinale ce qui peut permettre de rééquilibrer la structure de châssis lorsque l'agencement de part et d'autre de la poutre centrale creuse n'est pas symétrique.

Selon une réalisation, l'intérieur de l'espace intérieur protégé définit dans la poutre centrale creuse peut supporter et protéger au moins un autre organe fonctionnel de transmission relié au(x) train(s) avant et/ou arrière du véhicule automobile.

Dans ce cas, le au moins un autre organe(s) fonctionnel(s) de transmission peut être choisi parmi : un organe fonctionnel de propulsion destiné à assurer la propulsion des roues avant et/ou arrière du véhicule automobile, un organe fonctionnel de conduction d'énergie électrique, et un organe fonctionnel de transmission de liquide.

Selon une réalisation, la poutre centrale creuse présente une partie de structure périphérique, définissant les contours de l'espace intérieur protégé, en forme de profilé ouvert ou fermé et réalisée en matériau composite ou en métal.

Selon une réalisation alternative ou complémentaire, la poutre centrale creuse présente une partie de structure périphérique, définissant les contours de l'espace intérieur protégé, en forme de treillis ce qui assure une rigidité optimisée.

Selon une réalisation, la structure de châssis comprend des éléments de renfort complémentaires reliant la poutre centrale creuse aux trains avant et arrière, sans entraver l'accès aux deux structures de réception de manière à améliorer la rigidité de la structure de châssis.

Selon une réalisation, la structure de châssis des éléments de renfort complémentaires reliant la poutre centrale creuse aux deux structures de réception de manière à améliorer la rigidité de la structure de châssis.

Ces deux dernières réalisations permettent, malgré l'absence de renforts de rigidification s'étendant latéralement entre les extrémités des trains avant et arrière, d'optimiser les propriétés mécaniques de la structure de châssis.

Selon une réalisation, au moins l'une des structures de réception est apte à recevoir et à supporter, en sus du module de stockage d'énergie électrique, au moins un module fonctionnel complémentaire choisi parmi : un module de régulation, un module de contrôle, un module de sécurité et un module de stockage complémentaire d'énergie apte à approvisionner en énergie électrique un ou plusieurs composant(s) électronique(s) du véhicule automobile.

L'invention se rapporte également à un véhicule automobile à énergie électrique présentant une structure de châssis selon l'invention et un habitacle supporté par et maintenu à demeure sur la structure de châssis.

Selon une réalisation, le véhicule automobile présente alors deux structures de réception qui reçoivent et supportent, chacune, un module de stockage d'énergie électrique.

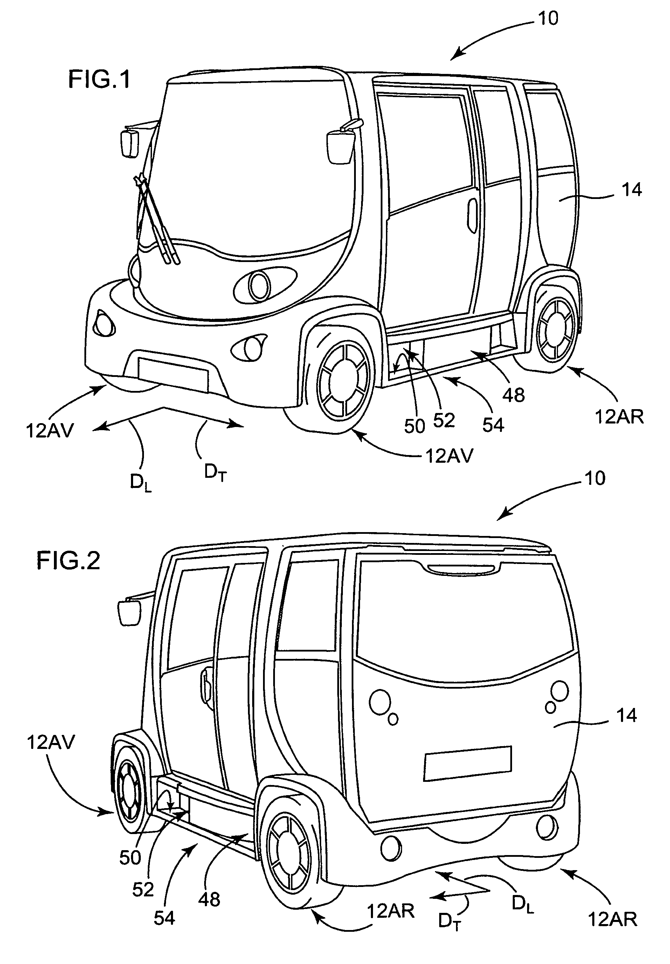

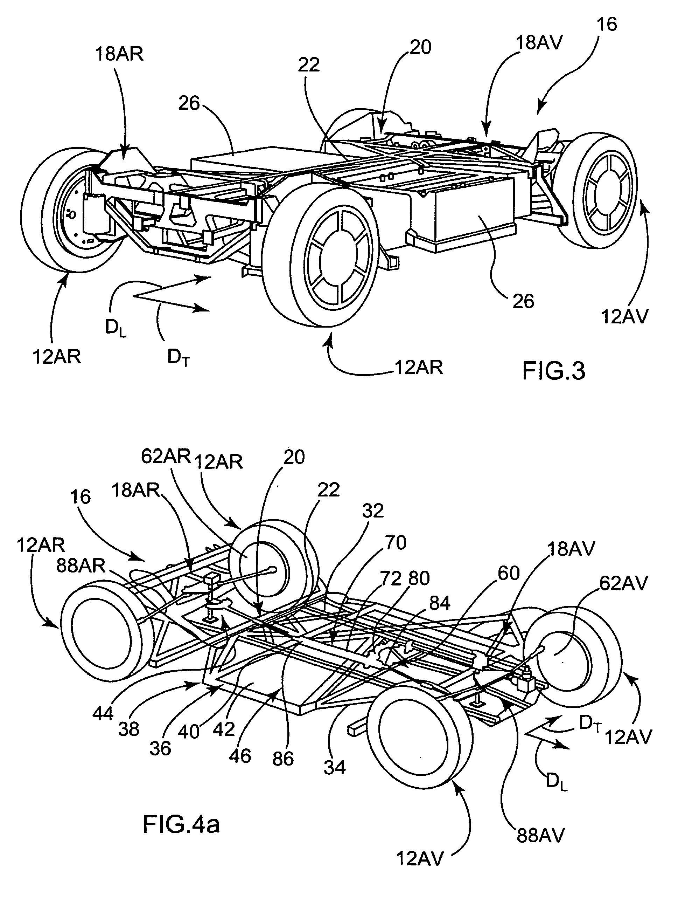

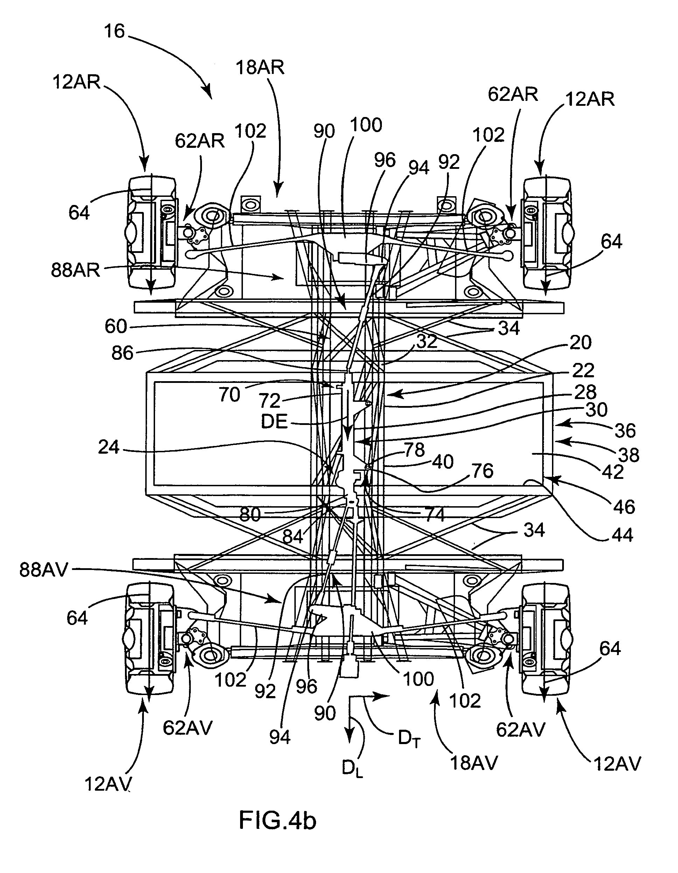

D'autres caractéristiques et avantages de l'invention ressortiront clairement de la description qui en est faite ci-après, à titre indicatif et nullement limitatif, en référence aux dessins annexés, dans lesquels :
■ La figure 1 est une vue d'ensemble générale, en perspective trois quart avant, d'un véhicule automobile à énergie électrique présentant une structure de châssis selon l'invention ;
■ La figure 2 est une vue d'ensemble générale, en perspective trois quart arrière, du véhicule automobile à énergie électrique de la figure 1 ;
■ La figure 3 est une vue de détail, en perspective, d'un premier mode de réalisation de la structure de châssis selon l'invention supporté par les roues avant et arrière d'un véhicule automobile et supportant deux modules de stockage d'énergie électrique ;
■ La figure 4a est une vue de détail, en perspective et en représentation symbolique, du premier mode de réalisation de la structure de châssis selon l'invention supporté par les roues avant et arrière d'un véhicule automobile dans lequel les deux modules de stockage d'énergie électrique ont été retirés ;
■ La figure 4b est une vue de détail, en vue de dessus et en représentation symbolique, du premier mode de réalisation de la structure de châssis selon l'invention supporté par les roues avant et arrière d'un véhicule automobile dans lequel les deux modules de stockage d'énergie électrique ont été retirés.

L'invention se rapporte à un véhicule automobile 10 à énergie électrique, c'est-à-dire un véhicule automobile 10 dont la propulsion est assurée en majeure partie grâce à de l'énergie électrique. Bien entendu, cette formulation n'est pas exclusive de formes de réalisation utilisant, dans une faible mesure, d'autres sources d'énergie pour assurer sa propulsion et/ou le fonctionnement de différents types de modules fonctionnels embarqués.

D'autre part, l'expression de véhicule automobile 10 à énergie électrique doit s'entendre dans son acceptation la plus large et peut, à cet égard, concerner tout type de véhicule terrestre à roues propulsé par au moins un moteur électrique autonome embarqué et capable de transporter, sur route ouverte et dans des conditions standards de déplacement un conducteur ainsi qu'un ou plusieurs passagers et/ou une ou plusieurs marchandises.

Un tel véhicule automobile 10 est représenté à titre exemplatif et non limitatif sur les figures 1 et 2.

Ce véhicule automobile 10 est capable de se déplacer sur route selon une trajectoire de déplacement et comporte deux roues avant 12AV et deux roues arrière 12AR permettant de faire l'interface entre le véhicule automobile 10 et la route.

Ce véhicule automobile 10 présente également un habitacle 14 permettant de recevoir, d'une part, le conducteur et, d'autre part, les passagers et/ou les marchandises transportées par le véhicule automobile 10. L'habitacle 14 abrite ainsi des commandes de pilotage et des commandes de gestion des environnements intérieur et extérieur du véhicule automobile 10.

Ledit véhicule automobile 10 comporte, en outre, une structure de châssis 16 reliée à rotation aux roues avant 12AV et arrière 12AR du véhicule automobile 10. De cette façon, l'habitacle 14 repose et est maintenu à demeure sur la structure de châssis 16 qui est, elle-même, supportée à l'horizontal par les roues avant 12AV et arrière 12AR du véhicule automobile 10.

Une réalisation de la structure de châssis 16 selon l'invention est représentée sur la figure 3.

Plus particulièrement, la structure de châssis 16 présente un train avant 18AV et un train arrière 18AR s'étendant tous deux dans une direction transversale DT sensiblement horizontale et perpendiculaire à une direction longitudinale DL.

Il convient d'entendre par train avant 18AV et train arrière 18AR, l'ensemble des organes mécaniques formant respectivement les parties avant et arrière de le structure de châssis 16 et permettant d'assurer, d'une part, la liaison de cette structure de châssis 16 avec les roues avant 12AV et arrière 12AR et, d'autre part, la liaison des roues avant 12AV et arrière 12AR entre-elles.

Le train avant 18AV est relié à rotation aux deux roues avant 12AV et le train arrière 18AR est relié à rotation aux deux roues arrière 12AR de sorte que les roues avant 12AV et arrière 12AR sont à même de tourner autour d'un axe géométrique horizontal pour assurer le déplacement du véhicule automobile 10.

Compte-tenu de l'agencement respectif des trains avant 18AV et arrière 18AR vis-à-vis des roues avant 12AV et arrière 12AR, la structure de châssis 16 est supportée par les roues avant 12AV et arrière 12AR en mode normal de fonctionnement.

La structure de châssis 16 selon l'invention comporte en outre des moyens formant rigidification 20 aptes à relier structurellement et fonctionnellement le train avant 18AV au train arrière 18AR de manière à assurer la rigidité de la structure de châssis 16. En effet, il importe que la structure de châssis 16 assure une liaison structurelle et fonctionnelle suffisante entre le train avant 18AV et le train arrière 18AR pour que ladite structure de châssis 16 forme une unité compacte, indissociable et rigide malgré les contraintes importantes susceptibles de s'appliquer sur l'un ou l'autres des trains avant 18AR et arrière 18AR lors de l'utilisation du véhicule automobile 10.

Selon l'invention, les moyens de rigidification 20 sont formés par une poutre centrale creuse 22 qui relie le train avant 18AV au train arrière 18AR de manière structurelle et fonctionnelle afin d'assurer la rigidité de la structure de châssis 16 et de supporter la majeure partie des contraintes de séparation des trains avant 18AR et arrière 18AR du véhicule automobile 10. En premier lieu, il convient de souligner que la poutre centrale creuse 22 s'étend entre le train avant 18AV et le train arrière 18AR dans une direction sensiblement horizontale et orientée selon la direction longitudinale DL. En deuxième lieu, il est à noter cette poutre centrale creuse 22 s'étend dans une zone longitudinale médiane à encombrement transversal réduit de ladite structure de châssis 16.

Il convient d'entendre par « zone longitudinale médiane à encombrement transversal réduit » une zone présentant une largeur, dans la direction transversale DT, suffisamment faible par rapport à la largeur totale de la structure de châssis 16 dans cette même direction transversale DT pour assurer la mise en place, au sein de la structure de châssis 16, de part et d'autre de la poutre centrale creuse 22, de moyens de stockage (non représentés) d'énergie électrique présentant des dimensions et donc une capacité de stockage suffisante pour assurer la propulsion du véhicule automobile 10. À titre exemplatif et nullement limitatif, il convient de noter que la capacité de stockage des moyens de stockage 26 d'énergie électrique est généralement supérieure ou égale à 5 kilowatt-heures (kWh), ce qui représente un poids d'environ 200 kg.

Il est d'ailleurs préférable que cette zone longitudinale médiane à encombrement transversal réduit présente une largeur suffisamment faible pour que les modules de stockage 26 d'énergie électrique puissent être mis en place sans déborder, en hauteur ou dans la direction transversale DT, de la structure de châssis 16.

L'utilisation de la poutre centrale creuse 22 permet d'éviter l'emploi de renforts de rigidification s'étendant latéralement entre les extrémités des trains avant 18AV et arrière 18AR et, ainsi, de faciliter l'accès et l'intégration des modules de stockage 26 d'énergie électrique à proximité du centre de gravité du véhicule automobile 10. De cette façon, le poids de ces modules de stockage 26 n'influence pas de manière préjudiciable le comportement du véhicule automobile 10 sur route et l'encombrement de ces modules de stockage 26 vis-à-vis de l'habitacle 14 est considérablement limité.

La poutre centrale creuse 22 définit, par ailleurs, un espace intérieur protégé 28 à l'intérieur duquel peut être supporté et protégé un ou plusieurs organe(s) fonctionnel(s) de transmission Les organes fonctionnels de transmission peuvent alors être reliés soit à l'un ou l'autre des trains avant 18AV et arrière 18AR soit à l'un et l'autre des trains avant 18AV et arrière 18AR du véhicule automobile 10.

Ainsi, la poutre centrale creuse 22 permet-elle non seulement d'assurer la rigidité de la structure de châssis 16 mais éventuellement, aussi, de supporter et de protéger l'ensemble des organes de transmission susceptibles d'être reliés aux trains avant 18AV et/ou arrière 18AR du véhicule automobile 10. Cette organisation est facile à mettre en place et participe à limiter l'encombrement au sein de la structure de châssis 16.

Pour obtenir un tel espace intérieur protégé 28, la poutre centrale creuse 22 présente une partie de structure périphérique 32 en forme de treillis et définissant les contours de l'espace intérieur protégé 28. Il est pertinent d'utiliser une telle structure en forme de treillis puisque, d'une part, cela permet de faciliter l'accès à l'espace intérieur protégé 32 tout en assurant un degré de protection des organes fonctionnels de transmission et que, d'autre part, cela allège considérablement la structure de châssis 16. Toutefois, selon une réalisation alternative (non représentée), il serait également possible d'obtenir un tel espace intérieur protégé 28 en réalisant une poutre centrale creuse 22 présentant une partie de structure périphérique 32 en forme de profilé ouvert ou fermé. Afin d'équilibrer le poids d'une telle structure périphérique 32, il peut d'ailleurs être envisagé de réaliser ledit profilé ouvert ou fermé en matériau composite ou bien en métal.

Il convient de noter que les organe(s) fonctionnel(s) de transmission susceptibles d'être supporté(s) et protégé(s) par la poutre centrale creuse 22 peut/peuvent être de natures diverses. En effet, il peut s'agir d'uns structure de direction telle que décrite ci-après en référence aux figures 4a et 4b et permettant d'assurer l'orientation des roues avant 12AV et arrière 12AR du véhicule automobile 10. Chaque roue avant 12AV et arrière 12AR peut alors, par exemple, être actionnée par l'intermédiaire d'un moteur indépendant. Les moteurs indépendants peuvent en outre se trouver alimentés en énergie électrique par les modules de stockage 26 d'énergie électrique via des organes fonctionnels de conduction d'énergie électrique reliant ces moteurs indépendants aux modules de stockage 26 d'énergie électrique.

Mais les organe(s) fonctionnel(s) de transmission susceptible(s) d'être supporté(s) et protégé(s) par la poutre centrale creuse 22 peut/peuvent être également ou alternativement être choisi(s) parmi : un organe fonctionnel de propulsion destiné à assurer la propulsion des roues avant 12AV et/ou arrière 12AR du véhicule automobile 10, un organe fonctionnel de conduction d'énergie électrique permettant d'alimenter tout composant, un organe fonctionnel de transmission de liquide, etc. Ces organe(s) fonctionnel(s) de transmission peut/peuvent être seulement en partie supporté(s) et protégé(s) à l'intérieur de l'espace intérieur protégé 28.

Par ailleurs, même si la structure de châssis 16 selon l'invention use en premier lieu de la poutre centrale creuse 22 comme moyen de rigidification 20, il peut également être fait appel à des éléments de renfort complémentaires 34 n'entravant pas l'accès aux modules de stockage 26 et assurant à titre secondaire la rigidité de la structure de châssis 16.

Comme représenté sur les figures 4a et 4b à titre exemplatif et nullement limitatif, les éléments de renfort complémentaires 34 peuvent ainsi relier la poutre centrale creuse 22 aux trains avant 18AV et arrière 18AR de manière à améliorer la rigidité de la structure de châssis 16. Mais les éléments de renfort complémentaires 34 peuvent également comprendre d'autres éléments de renfort complémentaires 34 reliant la poutre centrale creuse 22 à deux structures de réception (décrites ultérieurement) permettant de recevoir les deux modules de stockage d'énergie électrique, de manière à améliorer la rigidité de la structure de châssis 16.

La structure de châssis 16 selon l'invention comporte également des moyens formant réceptacle 36.

Comme l'illustrent les figures 4a et 4b sur lesquelles les moyens de stockage 26 d'énergie électrique ne sont pas représentés, les moyens formant réceptacle 36 sont agencés entre le train avant 18AV et le train arrière 18AR.

Ces moyens formant réceptacle 36 sont capables de recevoir et de supporter un système de stockage d'énergie électrique permettant d'approvisionner le véhicule automobile 10 en énergie électrique en quantité suffisante pour assurer sa propulsion. Plus précisément, les moyens formant réceptacle 36 selon l'invention comprennent deux structures de réception 38 aptes à recevoir et à supporter, chacune, un module de stockage 26 d'énergie électrique.

Chaque structure de réception 28 est disposée dans l'espace défini entre le train avant 18AV, le train arrière 18AR et la poutre centrale creuse 22. Grâce à la géométrie de la structure de châssis 16, cet espace présente des dimensions optimisées, ce qui permet d'assurer l'intégration de structures de réception 28 ayant une capacité de réception suffisante pour l'intégration de modules de stockage d'énergie électrique destinés à assurer la propulsion du véhicule automobile 10.

Plus précisément, les deux structures de réception 38 se font face et sont disposées de part et d'autre de la poutre centrale creuse 22. Ainsi, ces deux structures de réception 38 autorisent la réception des modules de stockage26 d'énergie électrique à proximité du centre de gravité de la structure de châssis 16. D'autre part, le fait de positionner les deux structures de réception 38 de cette manière limite l'encombrement des moyens formant réceptacle 36 tout en assurant un accès optimisé aux modules de stockage d'énergie, ce qui facilite leur manutention. En outre, l'intérêt d'utiliser des structures de réception 38 agencées de part et d'autre de la poutre centrale creuse 22 à encombrement transversal réduit consiste à rapprocher les modules de stockage 26 d'énergie électrique du centre de gravité du véhicule automobile 10 et donc à éviter que le poids de ces modules de stockage 26 n'influence de manière préjudiciable le comportement du véhicule automobile 10 sur route.

Chacune des deux structures de réception 38 comporte une butée de réception 40 formée par la poutre centrale creuse 22, ce qui empêche le déplacement transversal du module de stockage 26 d'énergie électrique vers le centre de gravité de la structure châssis 16 lorsque ce dernier est, par exemple, soumis aux forces de déplacement résultant de l'accélération du véhicule automobile 10. En cela, la poutre centrale creuse 22 assure - via la butée de réception 40 - la protection des organes fonctionnels de transmission 30 placés dans de l'espace intérieur protégé 28.

D'autre part, chaque structure de réception 38 présente une structure formant support horizontal 42 s'étendant horizontalement depuis la poutre centrale creuse 22 et sans dépassement transversal vis-à-vis des roues avant 12AV et arrière 12AR du véhicule automobile 10. Ladite structure formant support horizontal 42 est aménagée et agencée de manière à permettre le support de l'un ou l'autre des modules de stockage 26 d'énergie électrique.

Chaque structure de réception 38 comporte également deux parois latérales 44 s'étendant sensiblement dans la direction transversale DT depuis la poutre centrale creuse 22 de part et d'autre de la structure formant support horizontal 42. De cette façon, lesdites parois latérales 44 permettent de faciliter la mise en place et de maintenir fermement en position le module de stockage 26 d'énergie électrique dans la direction longitudinale DL et d'annihiler tout risque d'éjection vers les trains avant 18AV ou arrière 18AR du véhicule automobile 10.

Selon une réalisation différente de celle qui est représentée sur les figures 4A et 4b, lesdites parois latérales 44 peuvent en fait correspondre à des éléments de butée (non représentés) assurant de façon similaire la mise en place et le maintien en position du module de stockage 26 d'énergie électrique à l'intérieur de la structure de réception 38 correspondante.

Chaque structure de réception 38 présente également une ouverture d'introduction et d'extraction 46 agencée entre les deux parois latérales 44 et en regard de la poutre centrale creuse 22 de manière à autoriser l'introduction et l'extraction, par coulissement dans la direction transversale, du module de stockage 26 d'énergie électrique correspondant depuis l'extérieur de la structure de châssis 16. Une telle disposition permet de faciliter la manutention des objets lourds que sont ces modules de stockage 26 d'énergie électrique.

Il convient de noter que chaque structure de réception 38 est apte à recevoir un module de stockage 26 d'énergie électrique permettant d'assurer la propulsion du véhicule automobile 10 sur une durée et/ou une distance satisfaisante. Toutefois, chaque structure de réception 38 peut être réalisée de manière à réceptionner également un ou plusieurs module(s) fonctionnel(s) complémentaire(s) assurant le fonctionnement du véhicule automobile 10 ou des équipements de ce véhicule automobile 10.

À cet égard, chaque structure de réception 38 peut également permettre la réception d'un module de régulation, d'un module de contrôle, d'un module de sécurité ou de protection antivol, d'un module d'éclairage intérieur ou extérieur, d'un module d'allumage, d'un module d'activation des essuie-glaces, d'un module d'activation de fermeture centralisée, d'un module de commande et d'éclairage du tableau de bord, d'un module de régulation thermique, et/ou d'un module de stockage complémentaire d'énergie électrique apte à approvisionner en énergie électrique un ou plusieurs composant(s) électronique(s) du véhicule automobile et analogue.

Selon une réalisation, chacune des deux structures de réception 38 est, en outre, associée à un élément obturateur amovible 48 pouvant être manipulé et déplacé manuellement ou de manière automatique afin d'autoriser l'introduction du module de stockage 26 d'énergie électrique correspondant au travers de l'ouverture d'introduction et d'extraction 46.

Plus précisément, l'élément obturateur amovible 48 est apte à être placé dans une position fermée dans laquelle il empêche l'extraction transversale, par coulissement, du module de stockage 26 au travers de l'ouverture d'introduction et d'extraction. L'élément obturateur amovible 48 est également apte à être déplacé jusqu'à une position ouverte dans laquelle il autorise l'introduction et l'extraction transversale, par coulissement, du module de stockage 26 au travers de l'ouverture d'introduction et d'extraction 46.

Selon la réalisation représentée sur les figures 1 et 2, l'élément obturateur amovible 48 présente, en position fermée, une portion formant surface d'appui verticale 50 au-dessus laquelle est aménagé un volume libre de tout obstacle 52 de sorte à former un marchepied 54 permettant de faciliter l'accès à un utilisateur à l'intérieur de l'habitacle du véhicule automobile 10.

Ainsi, la montée du passager dans l'habitacle 14, surélevé au dessus de la structure de châssis 16 selon l'invention, est facilitée grâce à la présence de ce marchepied 54.

Il convient par ailleurs de souligner que, selon la réalisation des figures 4a et 4b, les deux structures de réception 38 sont agencées en regard l'une de l'autre mais que chacune de structures de réception 38 ne remplit pas nécessairement tout l'espace définit entre le train avant 18AV, le train arrière 18AR et la poutre centrale creuse 22. Une telle disposition permet d'aménager entre les structures de réception 38 et les trains avant 18AV ou arrière 18AR des espaces secondaires dans lesquels peuvent être introduits d'autres modules fonctionnels destinés à assurer le fonctionnement des équipements du véhicule automobile 10.

Ces modules fonctionnels peuvent, comme précédemment, correspondre à un module de régulation, un module de contrôle, un module de sécurité ou de protection antivol, un module d'éclairage intérieur ou extérieur, un module d'allumage, un module d'activation des essuie-glaces, un module d'activation de fermeture centralisée, un module de commande et d'éclairage du tableau de bord, un module de régulation thermique, et/ou un module de stockage 26 complémentaire d'énergie électrique apte à approvisionner en énergie électrique un ou plusieurs composant(s) électronique(s) du véhicule automobile et analogue.

Toutefois, selon une réalisation alternative non représentée, les structures de réception 38 peuvent également se trouver décalées l'une par rapport à l'autre, dans la direction longitudinale. De cette façon, les espaces secondaires aménagés entre les structures de réception 38 et les trains avant 18AV ou arrière 18AR présentent des dimensions plus importantes et permettent donc de contenir des modules fonctionnels plus encombrants lorsque cela s'avère nécessaire.

Le véhicule automobile 10 selon l'invention peut également comporter une structure de direction 60.

Cette structure de direction 60 est destinée à assurer l'orientation simultanée des deux roues avant 12AV et des deux roues arrière 12AR afin de faciliter le déplacement du véhicule automobile 10 le long de la trajectoire de déplacement du véhicule automobile 10 même lorsque cette dernière est fortement incurvée.

Pour ce faire, la structure de direction 60 comporte deux rotules d'orientation avant 62AV reliées fonctionnellement aux roues avant 12AV ainsi que deux rotules d'orientation arrière 62AR reliées fonctionnellement aux roues arrière 12AR.

Ces rotules d'orientation avant 62AV et arrière 62AR font office d'interface mécanique entre les roues avant 12AV et arrière 12AR, d'une part, et les trains avant 18AV et arrière 18AR de la structure de châssis 16, d'autre part. Ainsi, les rotules d'orientation avant 62AV, d'une part, et les rotules d'orientation arrière 62AR, d'autre part, se font-elles face dans la direction transversale DT. Par ailleurs, chaque rotule d'orientation 62AV, 62AR permet d'autoriser l'orientation de la roue 12AV, 12AR correspondante selon une direction d'orientation 64 qui lui est propre. De cette façon, il est ainsi possible de définir un angle de braquage α entre la direction longitudinale DL du véhicule automobile 10 et la direction d'orientation 64 de chaque roue 12AV, 12AR.

Selon une réalisation, les rotules d'orientation avant 62AV et arrière 62AR sont réalisées à partir de pièces mécaniques identiques ou similaires de manière à limiter les coûts de production de la structure de direction 60.

Selon cette réalisation, la structure de direction 60 présente, en outre, un boîtier de direction 70.

Ce boîtier de direction 70 comporte un corps rigide 72 creux s'étendant majoritairement selon une direction d'épanouissement DE sensiblement rectiligne. Le corps rigide 72 est agencé au sein de la structure de direction 60 de sorte que la direction d'épanouissement DE coïncide sensiblement avec la direction longitudinale. Par ailleurs, le corps rigide 72 est positionné au sein de cette structure de direction à l'intérieur d'une zone longitudinale médiane, c'est-à-dire sensiblement à équidistance des rotules d'orientation avant et 62AV et arrière 62AR dans la direction transversale.

Le corps rigide 72 peut être positionné vis-à-vis de la structure de châssis 16 à différentes positions dans la direction longitudinale DL.

Toutefois, selon une réalisation, ce corps rigide 72 est positionné entre les trains avant 18AV et arrière 18AR de la structure de châssis 16 et, si possible, au sein d'une zone transversale médiane de sorte que le boîtier de direction 70 se trouve sensiblement à équidistance des rotules d'orientation avant 62AV et des rotules d'orientation arrière 62AR dans la direction longitudinale DL.

La sécurité au sein du véhicule automobile 10 est ainsi renforcée puisque le positionnement du boîtier de direction 70 au sein de la zone transversale médiane - et non vers l'avant du véhicule automobile 10, comme habituellement - permet de réduire de manière significative l'effet de recul de la colonne de direction susceptible d'être généré en cas de choc frontal dudit véhicule automobile 10.

Le boîtier de direction 70 comporte également des moyens de fixation 74 permettant de fixer le corps rigide 72 à demeure sur un élément de support du véhicule automobile 10. Ces moyens de fixations 74 peuvent soit faire partie intégrante soit être structurellement distinct du corps rigide 70.

De manière avantageuse, direction d'épanouissement DE du corps rigide 72 coïncide sensiblement avec la direction longitudinale DL du véhicule automobile 10.

Pour ce faire, les moyens de fixation 74 sont agencés de manière à autoriser la mise en place et le maintien en position du corps rigide 72 sur le véhicule automobile 10 et tout en étant orienté dans la direction longitudinale DL. Puisque le corps creux 72 s'étend majoritairement dans la direction d'épanouissement DE et que cette direction d'épanouissement DE coïncide sensiblement avec la direction longitudinale DL, l'encombrement du boîtier de direction 70 est restreint à une zone d'encombrement transversal réduit 24, c'est-à-dire que l'encombrement de ce boîtier de direction 70 dans la direction transversale DT est particulièrement limitée.

Selon les réalisations des figures 4a et 4b, les moyens de fixation 74 sont composés de deux pattes de fixation 76 s'étendant depuis le corps rigide 72 et présentant chacune un orifice 78 pour assurer - par visserie, boulonnerie, ou analogue - le maintien en position de la patte de fixation 74 et, partant, du corps rigide 72 sur l'élément de support du véhicule automobile 10.

Selon cette réalisation, les pattes de fixation 76 sont agencées d'un coté du corps rigide 72 mais il serait également possible qu'elles soient disposées de part et d'autre dudit corps rigide 72. En outre, ces pattes de fixations 76 et/ou ces orifices 78 pourraient être remplacés par tout autre moyen de fixation 74 permettant d'assurer le maintien à demeure du corps rigide 72 sur l'élément de support du véhicule automobile 10. Il en est ainsi du soudage, du collage, de l'assemblage isostatique, etc.

Le boîtier de direction 70 présente également un axe d'entrée 80 apte à être relié, directement ou indirectement, à une colonne de direction appartenant au véhicule automobile 10 de sorte que la rotation de cette colonne de direction entraîne le déplacement de l'axe d'entrée 80 et, ainsi, l'activation du boîtier de direction 70.

Ce déplacement de l'arbre d'entrée peut correspondre soit à un déplacement en rotation, soit à un déplacement en translation selon le moyen de liaison mécanique reliant la colonne de direction du véhicule automobile 10 à l'axe d'entrée 80 du boîtier de direction 70.

Le boîtier de direction 70 présente également un axe de sortie avant 84 monté mobile à l'intérieur du corps rigide 72 et pouvant se déplacer dans la direction d'épanouissement de ce corps rigide 72 sous l'impulsion de l'axe d'entrée 80. Plus particulièrement, l'axe de sortie avant 84 est lié mécaniquement à l'arbre d'entrée 80 de sorte qu'un déplacement de cet arbre d'entrée 80 génère un déplacement proportionné de l'axe de sortie avant 84 dans la direction d'épanouissement du corps rigide 72.

Le boîtier de direction 70 présente, de manière similaire ou équivalente, un axe de sortie arrière 86 également monté mobile à l'intérieur du corps rigide 72 du boîtier de direction 70, à distance de l'axe de sortie avant 84. Cet axe de sortie arrière 86 peut se déplacer dans la direction d'épanouissement DE du corps rigide 72 sous l'impulsion de l'axe d'entrée 80 et, comme précédemment, l'axe de sortie arrière 86 est alors en prise mécanique avec l'arbre d'entrée 80 de sorte qu'un déplacement de cet arbre d'entrée 80 génère un déplacement proportionné de l'axe de sortie arrière 86.

En d'autres termes, l'axe d'entrée 80 est mécaniquement lié aux axes de sortie avant 84 et arrière 86 à l'intérieur du corps rigide 72 de sorte qu'un déplacement de l'axe d'entrée 80 génère un déplacement proportionnel, par translation dans la direction longitudinale DL, des axes de sortie avant 84 et arrière 86.

Cet agencement dans lequel la colonne de direction du véhicule automobile 10 est relié à l'axe d'entrée 80 du boîtier de direction 70, lequel assure le déplacement simultané des rotules de rotation avant 62AV et arrière 62AR permet de limiter le nombre de pièce mécanique utile à l'orientation des roues avant 12AV et arrière 12AR du véhicule automobile 10. Par ailleurs, comme indiqué précédemment, le fait que l'axe de sortie avant 84 et l'axe de sortie arrière 86 se déplacent dans la direction d'épanouissement DE permet de limiter l'encombrement dans la direction transversale DT généré par l'actionnement du boîtier de direction 70. Cela permet aussi de limiter l'espace nécessaire pour l'intégration de la structure de direction 60 à une zone longitudinale médiane à encombrement transversal réduit 24.

À cet égard, selon une réalisation avantageuse, l'axe de sortie avant 84 et l'axe de sortie arrière 86 sont alignés dans la direction longitudinale DL de manière à réduire au minimum cet encombrement latéral.

La structure de direction 60 comporte un mécanisme de transmission latérale synchrone avant 88AV.

Ce mécanisme de transmission latérale synchrone avant 88AV est relié structurellement et fonctionnellement aux deux rotules d'orientation avant 62AV. Il permet d'orienter lesdites rotules d'orientation avant 62AV, de façon synchrone et selon des directions d'orientation 64 permettant d'assurer le déplacement du véhicule automobile 10 le long de la trajectoire de déplacement.

Plus particulièrement, le mécanisme de transmission latérale synchrone avant 88AV est relié à l'axe de sortie avant 84 afin que le déplacement de cet axe de sortie avant 84, par translation dans la direction d'épanouissement DE du corps rigide 72, actionne le mécanisme de transmission latérale synchrone et génère le déplacement des rotules d'orientations avant 62AV dans les directions d'orientation 64 correspondantes.

Les directions d'orientation 64 des deux rotules d'orientations avant 62AV ne sont d'ailleurs pas forcément identiques. En effet, selon une réalisation, le mécanisme de transmission latérale synchrone avant 88AV est agencé pour que, sous l'impulsion de l'axe de sortie avant 84, soit généré un déplacement de la rotule d'orientation avant 62AV suivant la courbe intérieure de la trajectoire de déplacement jusqu'à une direction d'orientation 64 présentant un angle de braquage a plus important que celui de la direction d'orientation 64 de la rotule d'orientation avant 62AV suivant la courbe extérieure de la trajectoire de déplacement.

Cette réalisation permet satisfaire, au mieux, les conditions de l'épure de Jeantaud selon lesquelles lorsque le véhicule automobile 10 se déplace selon une trajectoire de déplacement courbée, les roues avant 12AV suivent des tangentes de cercles dont les centres se confondent.

La structure de direction 60 comporte un mécanisme de transmission latérale synchrone arrière 88AR.

Ce mécanisme de transmission latérale synchrone arrière 88AR est, de façon similaire, relié structurellement et fonctionnellement aux deux rotules d'orientation arrière 62AR. Il permet ainsi d'orienter lesdites rotules d'orientation arrière 62AR, de façon synchrone et selon des directions d'orientation 64 antagoniste par rapport aux directions d'orientation 64 des rotules d'orientation avant 62AV.

De la même façon que précédemment, le mécanisme de transmission latérale synchrone arrière 88AR est relié à l'axe de sortie arrière 86 afin que le déplacement de cet axe de sortie arrière 86, par translation dans la direction d'épanouissement DE du corps rigide 72, actionne le mécanisme de transmission latérale synchrone arrière 88AR et génère le déplacement des rotules d'orientation arrière 62AV dans les directions d'orientation 64 correspondantes.

Comme précédemment, les directions d'orientation 64 des deux rotules d'orientations arrière 62AR ne sont pas nécessairement identiques et le mécanisme de transmission latérale synchrone arrière 88AR est, selon une réalisation, agencé pour que, sous l'impulsion de l'axe de sortie avant 84, soit généré un déplacement de la rotule d'orientation arrière 62AR suivant la courbe intérieure de la trajectoire de déplacement jusqu'à une direction d'orientation 64 présentant un angle de braquage a plus important que celui de la direction d'orientation 64 de la rotule d'orientation arrière 62AR suivant la courbe extérieure de la trajectoire de déplacement. Les conditions de l'épure de sont alors également respectées pour ce qui concerne les roues arrière 12AV du véhicule automobile 10.

Dans ce cas, il peut d'ailleurs, s'avérer utile que le mécanisme de transmission latérale synchrone avant 88AV soit coordonnées avec le mécanisme de transmission latérale synchrone arrière 88AR de sorte que les directions d'orientation 64 des rotules d'orientation avant 62AV et des rotules d'orientation arrière 62AR soient strictement antagonistes et satisfasse totalement les conditions de l'épure de Jeantaud.

Les mécanismes de transmission latérale synchrone avant 88AV et arrière 88AR présentent alors, si possible, une symétrie de structure et/ou de fonctionnement.

À l'inverse, il peut également être pertinent d'utiliser un mécanisme de transmission latéral synchrone arrière 88AR générant, sous l'effet du déplacement de l'axe d'entrée 80 du boîtier de direction 70, un déplacement des rotules d'orientation arrière 62AR moins important que le déplacement correspondant des rotules d'orientation avant 62AV généré par le mécanisme de transmission latéral synchrone avant 88AV.

Une telle possibilité peut être obtenue par la réalisation d'un boîtier de direction 70 présentant un axe de sortie avant 82 capable de se déplacer sur une course plus importante que l'axe de sortie arrière 84 sous l'effet d'un même déplacement de l'axe d'entrée 80. Alternativement ou conjointement, cette possibilité peut être obtenue par la réalisation d'un mécanisme de transmission latéral synchrone avant 88AV différent du mécanisme de transmission latéral synchrone arrière 88AR et générant - à translation identique des axes de sortie avant 82 et arrière 84 - un déplacement des rotules d'orientation avant 62AV plus important que le déplacement des rotules d'orientation arrière 62AR.

À titre alternatif ou complémentaire, il peut également être prévu d'employer, pour l'un ou l'autre des mécanisme de transmission latérale synchrone avant 88AV et arrière 88AR, un renvoi mécaniquement variable ou hydrauliquement variable en vue d'adapter les angles de braquages selon des lois prédéterminées.

Il est en outre pertinent de prévoir des mécanismes de transmission latérale synchrone avant 88AV et arrière 88AR réalisés à partir de pièces mécaniques identiques ou similaires, ce qui permet de limiter de manière importante les coûts de production de la structure de direction 60.

Par ailleurs, afin de limiter l'encombrement transversal susceptible d'être généré par ces mécanismes de transmission latérale synchrone avant 88AV et arrière 88AR, l'axe de sortie avant 84 et l'axe de sortie arrière 86 du boîtier de direction 70 peuvent - sans que cela soit nécessaire - être espacés l'un n de l'autre d'une distance d'espacement comprise entre 30 % et 60 % de la distance de séparation séparant les rotules d'orientation avant 62AV et arrière 62AR dans la direction longitudinale. Une telle fourchette permet d'obtenir un écartement suffisant de l'axe de sortie avant 84 vis-à-vis de l'axe de sortie arrière 86 pour ne pas que le débattement transversal des mécanismes de transmission latérale synchrone avant 88AV et arrière 88AR n'encombre la zone transversale médiane de la structure de châssis 16.

Les mécanismes de transmission latérale synchrone avant 88AV et arrière 88AR, tels que représentés sur les figures 4a et 4b vont maintenant être décrits.

Selon cette réalisation, les mécanismes de transmission latérale synchrone avant 88AV et arrière 88AR comprennent d'abord un élément d'accouplement 90 relié structurellement et fonctionnellement à l'axe de sortie avant 84 ou arrière 86 du boîtier de direction 70.

Cet élément d'accouplement 90 présente, d'une première part, une portion longitudinale inclinée 92 par rapport à la direction longitudinale DL, d'une deuxième part, une portion coudée 94 prolongeant la portion longitudinale DL et d'une troisième part, une portion transversale inclinée 96 prolongeant la portion coudée 94 et formant bras de levier.

Les mécanismes de transmission latérale synchrone avant 88AV et arrière 88AR comprennent également un module de renvoi latéral synchrone 100 présentant un arbre d'entraînement 102 sur lequel la portion transversale inclinée 96 de l'élément d'accouplement est accouplée.

Les mécanismes de transmission latérale synchrone avant 88AV et arrière 88AR comportent, en outre, deux biellettes de transmission 102 gauche et droite situées de part et d'autre du module de renvoi latéral synchrone 100 par rapport à un plan verticale médian orienté selon la direction longitudinale DL et reliées, respectivement, aux rotules d'orientation avant 62AV.

Ainsi, lorsque l'axe de sortie avant 84 ou arrière 86 du boîtier de direction 70 est déplacé par translation dans la direction d'épanouissement DE, la portion longitudinale inclinée 92 de l'élément d'accouplement 90 est, elle-même, déplacée. Ce déplacement provoque la rotation du bras de levier formé par la portion transversale inclinée 96 autour d'un axe géométrique et entraîne la rotation de l'arbre d'entraînement 102 appartenant au module de renvoi latéral synchrone 100. Le module de renvoi latéral synchrone 100 génère ainsi le déplacement simultanée des biellettes de transmission 102 qui assurent ainsi le déplacement et l'orientation des rotules d'orientation avant 62AV ou arrière 62AR jusqu'à ce qu'elles atteignent, respectivement, la direction d'orientation qui correspondant.

Selon la réalisation des figures 4a et 4b, les portions longitudinales inclinées 92 des éléments d'accouplement 90 appartenant aux mécanismes de transmission latérale synchrone avant 88AV et arrière 88AR s'étendent de part et d'autre du boîtier de direction 70 par rapport par rapport à un plan vertical médian orienté selon la direction longitudinale DL. Toutefois, ces portions longitudinales inclinées 92 pourraient alternativement s'étendre du même coté du boîtier de direction 70 par rapport par rapport au plan vertical médian orienté selon la direction longitudinale DL.

La structure de direction 60 telle que décrite en référence aux modes de réalisation des figures 4a et 4b est positionnées de sorte que le boîtier de direction 70, d'une part, et une partie des mécanismes de transmission latérale synchrone avant 88AV et 88AR, d'autre part, sont protégés par les moyens de rigidification 20 de la structure de châssis 16.

Plus exactement, le boîtier de direction 70 selon l'invention est agencés dans l'espace intérieur protégé 28 de la poutre centrale creuse 22 et les moyens de fixation 74 coopère avec ladite poutre centrale creuse 22 de sorte que le corps rigide 72 est maintenu à demeure à l'intérieur de cet espace intérieur protégé 28.

Par ailleurs, une partie des portions d'accouplement des mécanismes de transmission latérale synchrone avant 88AV et 88AR sont également positionnées dans l'espace intérieur protégé 28 et donc protégées par la poutre centrale creuse 22.

De cette façon, le gain de place obtenu grâce à la mise en oeuvre, d'une part, de la structure de direction selon l'invention et, d'autre part, de la structure de châssis telle que décrite précédemment est optimisé par l'intégration d'une partie des éléments formant la structure de direction à l'intérieure de ladite poutre centrale creuse 22. Cela facilite, notamment, l'intégration des structures de réception 28 dans la structure de châssis en vue d'y intégrer les module de stockage 26 d'énergie électrique.

## Revendications

1. Structure de châssis (16) spécialement destinée à supporter un habitacle (14) pour former un véhicule automobile (10) à propulsion électrique, comportant :
un train avant (18AV) et un train arrière (18AR) s'étendant dans une direction transversale (DT) sensiblement perpendiculaire à une direction longitudinale (DL) et aptes à être supportés, respectivement, par les roues avant (12AV) et arrière (12AR) dudit véhicule automobile (10) ;
des moyens formant rigidification (20) formés par une poutre centrale creuse (22) définissant un espace intérieur protégé (28) et s'étendant, d'une part, dans la direction longitudinale (DL) et, d'autre part, dans une zone longitudinale médiane à encombrement transversal réduit (24) de ladite structure de châssis (16), la poutre centrale creuse (22) étant apte à relier structurellement et fonctionnellement le train avant (18AV) au train arrière (18AR) de manière à assurer la rigidité de la structure de châssis (16) et à supporter la majeure partie des contraintes de séparation des trains avant (18AV) et arrière (18AR) du véhicule automobile (10) ;
des moyens formant réceptacle (36) comprenant deux structures de réception (38) agencées entre le train avant (18AV) et le train arrière (18AR), capables de recevoir et de supporter un système de stockage d'énergie électrique permettant d'approvisionner le véhicule automobile (10) en énergie électrique en quantité suffisante pour assurer sa propulsion, lesdites structures de réception (38) étant aptes à recevoir et à supporter, chacune, un module de stockage (26) d'énergie électrique et disposées de part et d'autre de la poutre centrale creuse (22) de sorte à autoriser la réception des modules de stockage (26) d'énergie électrique à proximité du centre de gravité de la structure de châssis (16) ;
une structure de direction (60) apte à assurer l'orientation des roues avant (12AV) et arrière (12AR) du véhicule automobile (10) ;
**caractérisé en ce que** la structure de direction (60) présente un boîtier de direction (70) qui, d'une part, comporte un corps rigide (72) creux s'étendant majoritairement selon une direction d'épanouissement (DE) coïncidant sensiblement avec la direction longitudinale et, d'autre part, est agencé et maintenu dans l'espace intérieur protégé (28) de la poutre centrale creuse (22) de sorte à limiter l'encombrement de la structure de châssis (16).

2. Structure de châssis (16) selon la revendication 1, dans laquelle chacune des deux structures de réception (38) comporte une butée de réception (40) formée par la poutre centrale creuse (22) de manière à empêcher le déplacement transversal du module de stockage (26) vers le centre de gravité de la structure de châssis (16).

3. Structure de châssis (16) selon l'une quelconque des revendications 1 et 2, dans laquelle chacune des deux structures de réception (38) comporte :
une structure formant support horizontal (42) s'étendant depuis la poutre centrale creuse (22) et apte à supporter le module de stockage (26),
deux parois latérales (44) s'étendant sensiblement dans la direction transversale (DT) depuis la poutre centrale creuse (22), de manière à maintenir en position dans la direction longitudinale (DL) ledit module de stockage (26) ;
une ouverture d'introduction et d'extraction (46) agencée entre les deux parois latérales (44) et en regard de la poutre centrale creuse (22) de manière à autoriser l'introduction et l'extraction transversales par coulissement dudit module de stockage (26) depuis l'extérieur de la structure de châssis (16).

4. Structure de châssis (16) selon la revendication 3, dans laquelle chacune des deux structures de réception (38) comportent un élément obturateur amovible (48) apte à être déplacé depuis une position fermée dans laquelle l'élément obturateur amovible (48) empêche l'extraction transversale, par coulissement, du module de stockage (26) au travers de l'ouverture d'introduction et d'extraction (46) et jusqu'à une position ouverte dans laquelle l'élément obturateur amovible (48) autorise l'introduction et l'extraction transversale, par coulissement, du module de stockage (26) au travers de l'ouverture d'introduction et d'extraction (46).

5. Structure de châssis (16) selon la revendication 4, dans laquelle l'élément obturateur amovible (48) présente, en position fermée, une portion formant surface d'appui verticale (50) au-dessus laquelle est aménagé un volume libre de tout obstacle (52) de sorte à former un marchepied (54) permettant de faciliter l'accès à un utilisateur à l'intérieur de l'habitacle (14) du véhicule automobile (10).

6. Structure de châssis (16) selon l'une quelconque des revendications 1 à 5, dans laquelle les deux structures de réception (38) sont agencées en regard l'une de l'autre.

7. Structure de châssis (16) selon l'une quelconque des revendications 1 à 5, dans laquelle les deux structures de réception (38) sont décalées l'une par rapport à l'autre, dans la direction longitudinale (DL).

8. Structure de châssis (16) selon l'une quelconque des revendications 1 à 7, dans laquelle l'intérieur de l'espace intérieur protégé (28) définit dans la poutre centrale creuse (22) peut supporter et protéger au moins un autre organe fonctionnel de transmission (30) relié au(x) train(s) avant (18AV) et/ou arrière (18AR) du véhicule automobile (10).

9. Structure de châssis (16) selon la revendication 8, dans laquelle le au moins un autre organe(s) fonctionnel(s) de transmission (30) est choisi parmi : un organe fonctionnel de propulsion destiné à assurer la propulsion des roues avant (12AV) et/ou arrière du véhicule automobile, un organe fonctionnel de conduction d'énergie électrique, et un organe fonctionnel de transmission de liquide.

10. Structure de châssis (16) selon la revendication 8 ou 9, dans laquelle la poutre centrale creuse (22) présente une partie de structure périphérique (32), définissant les contours de l'espace intérieur protégé (28), en forme de profilé ouvert ou fermé et réalisée en matériau composite ou en métal.

11. Structure de châssis (16) selon la revendication 8 ou 9, dans laquelle la poutre centrale creuse (22) présente une partie de structure périphérique (32), définissant les contours de l'espace intérieur protégé (28), en forme de treillis.

12. Structure de châssis (16) selon l'une quelconque des revendications 1 à 11, comprenant des éléments de renfort complémentaires (34) reliant la poutre centrale creuse (22) aux trains avant et arrière, sans entraver l'accès aux deux structures de réception (38) de manière à améliorer la rigidité de la structure de châssis (16).

13. Structure de châssis (16) selon l'une quelconque des revendications 1 à 12, comprenant des éléments de renfort complémentaires (34) reliant la poutre centrale creuse (22) aux deux structures de réception (38) de manière à améliorer la rigidité de la structure de châssis (16).

14. Structure de châssis (16) selon l'une quelconque des revendications 1 à 13, dans lequel au moins l'une des structures de réception (38) est apte à recevoir et à supporter, en sus du module de stockage (26) d'énergie électrique, au moins un module fonctionnel complémentaire choisi parmi : un module de régulation, un module de contrôle, un module de sécurité et un module de stockage (26) complémentaire d'énergie apte à approvisionner en énergie électrique un ou plusieurs composant(s) électronique(s) du véhicule automobile.

15. Véhicule automobile (10) à énergie électrique présentant une structure de châssis (16) selon l'une quelconque des revendications 1 à 14 et un habitacle (14) supporté par et maintenu à demeure sur la structure de châssis (16).

16. Véhicule automobile (10) selon la revendication 15, dans lequel les deux structures de réception (38) reçoivent et supportent, chacune, un module de stockage (26) d'énergie électrique.

## Patentansprüche

1. Fahrgestellstruktur (16), die speziell zum Tragen einer Fahrgastzelle (14) bestimmt ist, um ein Kraftfahrzeug (10) mit Elektroantrieb zu bilden, umfassend:
Eine Vorderachse (18AV) und eine Hinterachse (18AR), die sich in einer transversalen Richtung (DT) wesentlich senkrecht zu einer Längsrichtung (DL) erstrecken und geeignet sind, jeweils von den Vorderrädern (12AV) und Hinterrädern (12AR) des erwähnten Kraftfahrzeugs (10) getragen zu werden;
eine Versteifung bildende Mittel(20), die durch einen einen geschützten Innenraum (28) bildenden, einerseits in einer Längsrichtung (DL) und andererseits in einem medianen Längsbereich mit reduziertem transversalen Platzverbrauch (24) der erwähnten Fahrgestellstruktur (16) erstreckenden hohlen zentralen Balken (22) gebildet sind, der, wobei der hohle zentrale Balken (22) geeignet ist, strukturell und funktional die Vorderachse (18AV) mit der Hinterachse (18AR) derart zu verbinden, dass die Steifigkeit der Fahrgestellstruktur (16) gewährleistet ist und der größte Teil der Trennungsbeanspruchungen der Vorderachse (18AV) und der Hinterachse (18AR) des Kraftfahrzeugs (10) getragen ist;
eine Aufnahme bildende Mittel(36), umfassend zwei zwischen der Vorderachse (18AR) und der Hinterachse (18AR) angeordneten Aufnahmestrukturen (38), die in der Lage sind, ein Lagersystem für elektrische Energie aufzunehmen und zu tragen, das die Versorgung des Kraftfahrzeugs (10) mit elektrischer Energie in ausreichender Menge erlaubt, um den Antrieb des Kraftfahrzeugs zu gewährleisten, wobei die erwähnten Aufnahmestrukturen (38) geeignet sind, jeweils ein Lagermodul (26) für elektrische Energie aufzunehmen und zu tragen, und auf jeder Seite des hohlen zentralen Balkens (22) derart angeordnet sind, dass die Aufnahme der Lagermodule (26) für elektrische Energie in der Nähe des Schwerpunktes der Fahrgestellstruktur (16) zugelassen ist;
eine Lenkstruktur (60), die geeignet ist, die Ausrichtung der Vorderräder (12AV) und Hinterräder (12AR) des Kraftfahrzeugs (10) zu gewährleisten ;
**dadurch gekennzeichnet, dass** die Lenkstruktur (60) ein Lenkgehäuse (70) aufweist, das einerseits einen hohlen steifen Körper (72) aufweist, der sich hauptsächlich gemäß einer deutlich mit der Längsrichtung übereinstimmenden Ausbauchungsrichtung (DE) erstreckt, und andererseits in dem geschützten Innenraum (28) des hohlen zentralen Balkens (22) derart angeordnet und festgehalten ist, dass der Platzverbrauch der Fahrgestellstruktur (16) begrenzt ist.

2. Fahrgestellstruktur (16) gemäß Anspruch 1, bei der jede der zwei Aufnahmestrukturen (38) einen Aufnahmeanschlag (40) umfasst, der von den hohlen zentralen Balken (22) derart gebildet ist, dass die transversale Verschiebung des Lagermoduls (26) zum Schwerpunkt der Fahrgestellstruktur (16) verhindert ist.

3. Fahrgestellstruktur (16) gemäß Anspruch 1 oder 2, bei der jede der zwei Aufnahmestrukturen (38) umfasst:
eine einen horizontalen Träger (42) bildende Struktur, die sich von dem hohlen zentralen Balken (22) erstreckt und geeignet ist, das Lagermodul (26) zu tragen,
zwei Seitenwände (44), die sich von dem hohlen zentralen Balken (22) in der transversalen Richtung (DT) wesentlich derart erstrecken, dass das erwähnte Lagermodul (26) in der Längsrichtung (DL) in Position gehalten ist;
eine Einführ- und Austragsöffnung (46), die zwischen den zwei Seitenwänden (44) und gegenüber dem hohlen zentralen Balken (22) derart angeordnet ist, dass das transversale Einführen und Ausführen durch Gleiten des erwähnten Lagermoduls (26) von der Außenseite der Fahrgestellstruktur (16) zugelassen ist.

4. Fahrgestellstruktur (16) gemäß Anspruch 3, in der jede der zwei Aufnahmestrukturen (38) ein demontierbares Verschlusselement (48) umfasst, das geeignet ist, von einer geschlossenen Position, in der das demontierbare Verschlusselement (48) das transversale Austragen, durch Gleiten, des Lagermoduls (26) durch die Einführ- und Austragsöffnung (46) verhindert, und in eine offene Position, in der das demontierbare Verschlusselement (48) das transversale Einführen und Austragen durch Gleiten des Lagermoduls (26) durch die Einführ- und Austragsöffnung (46) zulässt, verschoben zu werden.

5. Fahrgestellstruktur (16) gemäß Anspruch 4, in der das demontierbare Verschlusselement (48) in geschlossener Position einen eine vertikale Stützfläche (50) bildenden Abschnitt aufweist, über dem ein von jedem Hindernis freies Volumen (52) derart angeordnet ist, dass ein Trittblech (54) gebildet ist, das die Erleichterung des Zugangs zum Innern der Fahrgastzelle (14) des Kraftfahrzeugs (10) für einen Nutzer ermöglicht ist.

6. Fahrgestellstruktur (16) gemäß Anspruch 1 bis 5, in der die zwei Aufnahmestrukturen (38) einander gegenüber angeordnet sind.

7. Fahrgestellstruktur (16) gemäß Anspruch 1 bis 5, bei der die zwei Aufnahmestrukturen (38) im Verhältnis zueinander in der Längsrichtung (DL) verschoben sind.

8. Fahrgestellstruktur (16) gemäß Anspruch 1 bis 7, in der die in dem hohlen zentralen Balken (22) definierte Innenseite des geschützten Innenraums (28) wenigstens ein weiteres funktionales Übertragungsorgan (30) tragen und schützen kann, das mit der Vorderachse (18AV) und/oder der Hinterachse (18AR) des Kraftfahrzeugs (10) verbunden ist.

9. Fahrgestellstruktur (16) gemäß Anspruch 8, in der das wenigstens eine weitere funktionale Übertragungsorgan (30) ausgewählt ist aus: einem funktionalen Antriebsorgan, das dazu bestimmt ist, den Antrieb der Vorderräder (12AV) und/oder Hinterräder des Kraftfahrzeugs zu gewährleisten, einem funktionalen Leitungsorgan für elektrische Energie und einem funktionalen Flüssigkeitsübertragungsorgan.

10. Fahrgestellstruktur (16) gemäß Anspruch 8 oder 9, in der der hohle zentrale Balken (22) einen umlaufenden Strukturteil (32) aufweist, der die Konturen des geschützten Innenraums (28) in Form eines offenen oder geschlossenen Profils definiert und aus Verbundmaterial oder aus Metall realisiert ist.

11. Fahrgestellstruktur (16) gemäß Anspruch 8 oder 9, in der der hohle zentrale Balken (22) einen umlaufenden Strukturteil (32) aufweist, der die Konturen des geschützten Innenraums (28) in Gitterform definiert.

12. Fahrgestellstruktur (16) gemäß Anspruch 1 bis 11, umfassend komplementäre Verstärkungselemente (34), die den hohlen zentralen Balken (22) mit den Vorder-und Hinterachse verbinden, ohne den Zugang zu den zwei Aufnahmestrukturen (38) zu behindern, derart, dass die Steifigkeit der Fahrgestellstruktur (16) verbessert ist

13. Fahrgestellstruktur (16) gemäß Anspruch 1 bis 12, umfassend komplementäre Verstärkungselemente (34), die den hohlen zentralen Balken (22) mit den zwei Aufnahmestrukturen (38) derart verbinden, dass die Steifigkeit der Fahrgestellstruktur (16) verbessert ist.

14. Fahrgestellstruktur (16) gemäß Anspruch 1 bis 13, in der wenigstens eine der Aufnahmestrukturen (38) geeignet ist, zusätzlich zu dem Lagermodul (26) für elektrische Energie, wenigstens ein komplementäres, funktionales Modul aufzunehmen und zu tragen, das aus einem Regulierungsmodul, einem Kontrollmodul, einem Sicherheitsmodul und einem für Versorgung einer oder mehrerer elektronischen Komponenten des Kraftfahrzeugs mit elektrischer Energie geeigneten komplementären Energielagermodul (26) ausgewählt ist.

15. Kraftfahrzeug (10) mit elektrischer Energie, das eine Fahrgestellstruktur (16) gemäß Anspruch 1 bis 14 und eine von der Fahrgestellstruktur (16) getragene und von ihm dauerhaft festgehaltene Fahrgastzelle (14) aufweist.

16. Kraftfahrzeug (10) gemäß Anspruch 15, in dem die zwei Aufnahmestrukturen (38) jeweils ein Lagermodul (26) für elektrische Energie aufnehmen und tragen.

## Claims

1. A frame structure (16) specially intended for supporting a passenger compartment (14) to form an electrically-powered automobile (10), comprising:
a front axle (18AV) and a rear (18AR) axle extending in a transverse direction (DT) substantially perpendicular to a longitudinal direction (DL) and adapted to be supported by the front (12AV) and the rear (12AR) wheels of said automobile (10) respectively;
stiffening means (20) formed by a hollow central beam (22) defining a protected inner space (28) and extending, on the one hand, in the longitudinal direction (DL) and, on the other hand, in a median longitudinal zone having reduced transverse dimensions (24) of said frame structure (16), with the hollow central beam (22) being capable of structurally and functionally connecting the front axle (18AV) to the rear (18AR) axle so as to ensure stiffness of the frame structure (16) and to support the major part of the separation stresses of the front (18AV) and rear (18AR) axles of the automobile (10);
receptacle forming means (36) comprising two receiving structures (38) arranged between the front axle (18AV) and the rear (18AR) axle, capable of receiving and supporting an electric power storage system for supplying the automobile (10) with electric power in a sufficient quantity to ensure the propulsion thereof, with each of said receiving structures (38) being adapted to receive and support an electric power storage module (26) and placed on both sides of the hollow central beam (22) so as to enable the reception of the electric power storage modules (26) near a centre of gravity of the frame structure (16);
a steering structure (60) able to ensure the orientation of the front (12AV) and the rear (12AR) wheels of the automobile (10);
**characterized in that** the steering structure (60) has a steering gear box (70) which, on the one hand, comprises a hollow rigid body (72) mainly extending along an extension direction (DE) substantially coinciding with the longitudinal direction, and on the other hand, is arranged and held in the protected inner space (28) of the hollow central beam (22) so as to limit the overall dimensions of the frame structure (16).

2. A frame structure (16) according to claim 1, wherein each one of the two receiving structures (38) comprises a receiving stop (40) formed by the hollow central beam (22) so as to prevent the transverse displacement of the storage module (26) towards the centre of gravity of the frame structure (16).

3. A frame structure (16) according to any one of claims 1 and 2, wherein each one of the two receiving structures (38) comprises:
a structure forming a horizontal support (42) extending from the hollow central beam (22) and adapted to support the storage module (26),
two side walls (44) substantially extending in the transverse direction (DT) from the hollow central beam (22), so as to maintain said storage module (26) in position in the longitudinal direction (DL);
an introduction and extraction opening (46) arranged between the two side walls (44) and opposite the hollow central beam (22) so as to enable the sliding transverse introduction and extraction of said storage module (26) from the outside of the frame structure (16).

4. A frame structure (16) according to claim 3, wherein each one of the two receiving structures (38) comprises a removable closing element (48) able to be moved from a closed position wherein the removable closing element (48) prevents the sliding transverse extraction of the storage module (26) through the introduction and extraction opening (46) and up to an open position wherein the removable closing element (48) enables the sliding transverse introduction and extraction of the storage module (26) through the introduction and extraction opening (46).

5. A frame structure (16) according to claim 4, wherein the removable closing element (48) has, in the closed position, a portion forming a vertical bearing surface (50) above which an obstacle-free volume (52) is so arranged as to form a step hanger (54) to facilitate the access of a user inside the passenger compartment (14) of the automobile (10).

6. A frame structure (16) according to any one of claims 1 to 5, wherein the two receiving structures (38) are arranged opposite each other.

7. A frame structure (16) according to any one of claims 1 to 5, wherein the two receiving structures (38) are offset with respect to each other in the longitudinal direction (DL).

8. A frame structure (16) according to any one of claims 1 to 7, wherein the interior of the protected inner space (28) defined in the hollow central beam (22) can support and protect at least another functional final drive component (30) connected to the front (18AV) and/or rear (18AR) axle(s) of the automobile (10).

9. A frame structure (16) according to claim 8, wherein the at least one other functional final component (30) is selected among: a functional propulsion member intended to ensure the propulsion of the front (12AV) and/or rear wheels of the automobile, a functional electric power conduction member, and a functional liquid transmission member.

10. A frame assembly (16) according to claim 8 or 9, wherein the hollow central beam (22) has a peripheral frame portion (32), defining the outlines of the protected inner space (28) in the form of an open or closed section and made of a composite material or a metal.

11. A frame assembly (16) according to claim 8 or 9, wherein the hollow central beam (22) has a lattice-shaped peripheral frame portion (32), defining the outlines of the protected inner space (28).

12. A frame structure (16) according to any one of claims 1 to 11, comprising complementary reinforcing elements (34) connecting the hollow central beam (22) to the front and rear axles, without impeding the access to the two receiving structures (38) so as to improve the stiffness of the frame structure (16).

13. A frame structure (16) according to any one of claims 1 to 12, comprising complementary reinforcing elements (34) connecting the hollow central beam (22) to the two receiving structures (38) so as to improve the stiffness of the frame structure (16).

14. A frame structure (16) according to any one of claims 1 to 13, wherein at least one of the receiving structures (38) is adapted to receive and support, in addition to the electric power storage module (26), at least one additional functional module selected among: a regulation module, a control module, a security module and a complementary power storage module (26) adapted to supply electric power to one or more electronic component (s) of the automobile.

15. An electrically-powered automobile (10) having a frame structure (16) according to any one of claims 1 to 14 and a passenger compartment (14) supported by and fixedly held on the frame structure (16).

16. An automobile (10) according to claim 15, wherein the two receiving structures (38) each receive and support an electric power storage module (26).
